# EUROPEAN PATENT SPECIFICATION

(11) **EP 4 504 564 B1**
(45) Date of publication and mention of the grant of the patent: **26.11.2025**
(21) Application number: 22720608.3
(22) Date of filing: 01.04.2022
(51) Int. Cl.: B60R 16/023, B62D 6/00, H01F 17/06, H01F 27/28, H01F 37/00, H01F 17/00, H01F 27/06

(54) **ELECTRONIC CONTROL UNIT FOR USE IN AN ELECTRIC POWER STEERING SYSTEM OF A VEHICLE**
ELEKTRONISCHE STEUEREINHEIT ZUR VERWENDUNG IN EINEM ELEKTRISCHEN SERVOLENKSYSTEM EINES FAHRZEUGS
UNITÉ DE COMMANDE ÉLECTRONIQUE DESTINÉE À ÊTRE UTILISÉE DANS UN SYSTÈME DE DIRECTION ASSISTÉE ÉLECTRIQUE D'UN VÉHICULE

(43) Date of publication of application: 12.02.2025
(73) Proprietor: HELLA GmbH & Co. KGaA, 59552 Lippstadt (DE)
(72) Inventor: DOYARD, Etienne, 31750 Escalquens (FR)
(74) Representative: Behr-Wenning, Gregor
(86) International application number: PCT/EP2022/058759
(87) International publication number: WO 2023/186323

(56) References cited:
- EP-A1- 3 176 884
- DE-A1- 102013 205 977
- JP-A- H0 795 658
- US-A1- 2016 182 002
- US-A1- 2018 033 575
- US-B1- 6 313 991

## Description

The present invention relates to an electronic control unit for use in an electric power steering system of a vehicle. Further the present invention relates to a process for manufacturing an electronic control unit as well as to a vehicle comprising at least one electronic control unit.

With regard to electronic components, the use of coils in the context of different applications is common practice. Commonly a coil may be placed on a printed circuit board (PCB) and brought into electrical connection with other electronic components, which are also placed on the PCB, via conductor tracks on the PCB. The size of the printed circuit board is therefore determined by the size of the components to be placed on the printed circuit board. Further, the number of conductor tracks required on a printed circuit board is determined by the need for electrical connections between the components placed on the printed circuit board. An exemplary control unit is shown in JPH0795658A. Additionally, EP3176884A1 shows a power supply cable.

However, large dimensions of a printed circuit board have a negative effect on the overall dimensions of an electronic component and thus on the potential integration of the electronic component into higher level systems. Further, an increasing number of conductive tracks on a PCB increases the complexity and material costs with regard to the manufacturing process of said PCB. Also, different components of electronic components are commonly shielded from external influences such as humidity or force application by individual housings. These housing are often glued to the PCB or the individual components in separate manufacturing steps, which in turn leads to a time-consuming and therefore cost-intensive manufacturing process.

Especially in the automotive sector, component dimensions must be kept as small as possible due to an often limited installation space. Further a reduction of component weight and material costs per unit are of great importance. Further, cost-effective manufacturing processes for individual parts are also of great importance, particularly with regard to the production of high volumes.

It is therefore the objective of the present invention to overcome at least one of the aforementioned disadvantages at least partially. In particular, it is the object of the invention to provide an electronic control unit for use in an electric power steering system of a vehicle which allows effective and cost-reduced production and/or has a compact and weight-efficient design and/or allows for an easier and weight-saving integration into a vehicle, preferably without having to compromise on functionality.

The aforementioned task is solved by a device for a vehicle having the features of claim 1 as well as by a process for manufacturing an electronic control unit having the features of claim 10 as well as by a vehicle having the features of claim 14

Features and details, which are described in connection with the electronic control unit according to the invention, also apply in connection with the process for manufacturing an electronic control unit and the vehicle and vice versa, so that reference is or can always be made mutually with regard to the disclosure concerning the individual aspects of the invention.

According to the invention, an electronic control unit (ECU) for use in an electric power steering system of a vehicle is provided. The ECU comprises at least a first battery terminal, a second battery terminal and an electromagnetic coil, wherein the coil comprises a core and at least a first winding wire and a second winding wire, wherein the winding wires (the first and second winding wire) are at least partially wound around the core. Further the first battery terminal is materially joined to the first winding wire and the second battery terminal is materially joined to the second winding, wherein at least the battery terminals and the coil are at least partially covered with and/or enclosed of at least one common layer of a protective material.

In other words, the ECU according to the present invention comprises at least a first and a second battery terminal and an electromagnetic coil, wherein each battery terminal is directly connected to a wire wounded around the core of said coil by a material joint. Further the battery terminals and the coil are at least partially covered with at least one common layer of a protective material in order to shield at least the battery terminals and the coil from external influences such as humidity or force application.

The ECU according to the present invention offers the advantage, that due to a direct connection of the battery terminals and the wounding wires of the coil, a particularly reliable electrical connection is created between the components. Also, this type of connection allows a particularly weight- and cost-efficient design of the ECU as no further components or infrastructure such as a PCB or conductive tracks on a PCB are required for the electrical connection between the coil and the battery terminals. Further, at least the battery terminals and the coil are at least partially covered by a common layer of a protective material for protection against external influences such das humidity or force application. Therefore, separate components are no longer covered by separate housings, as rather a common housing is used to cover multiple components of the ECU simultaneously. This has the advantage that the number of manufacturing steps can be decreased as only a single housing and/or protective cover needs to be mounted and/or applied to the components instead of mounting multiple housings in separate manufacturing steps.

The ECU of the present invention may be used in different types of vehicles. The vehicle may preferably be a car or a truck. Also, the vehicle may be a working vehicle, in particular an agricultural machine such as a tractor or a rotary mower. A usage of the device according to the invention in or in connection with other types of vehicles is not excluded by the invention. The device of the present invention may be used in vehicles using any type of drive technology such as a common combustion engine, an electrical engine, fuel cells or any hybrid combination of those. Further drive technologies are not excluded from the present invention.

It may be provided in the scope of the present invention that the ECU is configured to receive steering signals from at least one steering sensor and convert them into corresponding control commands for at least one servomotor, wherein the at least one servomotor is operatively connected to at least one wheel of the vehicle and can thus initiate or execute a steering movement of said wheel.

In the scope of the present invention, a battery terminal may be understood as an electrical contact which can at least partially be brought into contact with a battery in order to use the battery as a voltage and/or power source in an electrical circuit. At least one battery may be comprised by the ECU. Preferably, at least two or exactly two battery terminals may be provided, whereby each battery terminal is brought into contact with one pole (plus or minus) of a battery at the same time in order to connect the battery as a voltage and/or power source in an electrical circuit and to allow an electrical current flow in the circuit.

With regard to the present invention it may be provided, that the first battery terminal is intended for being connected to a plus pole of a battery and the second battery terminal is intended for being connected to a minus pole of the same battery or vice versa, in order to connect said battery into an electric circuit of the ECU.

In the scope of the present invention it is conceivable, that the material joint between a winding wire and a battery terminal is designed in such a way that electrical conductivity is ensured between the battery terminal and the winding wire via the joint. The material joint may be a solder joint or preferably a welded joint. By means of a welded joint, a particularly durable and thus failure-proof connection is achieved. In case of a welded joint, the joint may be achieved by laser welding. This allows for a particularly efficient production due to the high potential with regard to automatization.

It may further be provided in the course of the present invention, that the protective material is a plastic, preferably a thermoplastic. This has the advantage that the components surrounded by the protective material are effectively and reliably protected, while at the same time enabling cost-effective and simple production.

It may further be provided, that the protective material is at least partially applied in the course of an overmolding process. In an overmolding process a melted protective material such as a plastic or thermoplastic, may be applied to certain areas of the ECU in order cover at least sections of the ECU with the protective material. While cooling the protective material hardens to solid state and reliably protects the corresponding sections of the ECU from external influences. It may be provided, that at least the battery terminals and the coil are at least partially covered with the protective material in the course of an overmolding process.

For use in an overmolding process, protective materials such as PBT (Polybutylene terephthalate), ABS (Acrylonitrile butadiene styrene) or PE (Polyethylene), preferably HDPE (high-density Polyethylene), have proven to be particularly advantageous in terms of simple and cost-effective processing, while offering good protection of the covered components and/or sections of the ECU. The usage of further materials in the course of an overmolding process is however not excluded from the present invention. The protective material may further be mixed with fibers, preferably glass or plastic fibers, to improve the material properties.

It is further conceivable in the scope of the present invention, that the protective material is at least partially in direct contact with the coil and/or the first battery terminal and/or the second battery terminal. This can be achieved, for example, by directly coating the components with the protective material in an overmolding process. This results in a particularly compact and lightweight design of the ECU, as the size of the housing can be at least partially directly adapted to the surface of the respective components.

It may be further provided, that at least the protective material and the coil and/or at least the protective material and the first battery terminal and/or at least the protective material and second battery terminal can be at least partially joined in a form-fitting manner, preferably when the protective material is in a solid state. This has the advantage that no additional fastening or securing of the protective material to the ECU and/or components of the ECU is required, since a form fit has been formed by enclosing individual components at least in sections, for example in the course of an overmolding process.

It may also be provided in the scope of the present invention, that the coil additionally comprises at least a third and a fourth winding wire, wherein the winding wires are at least partially wound around the core and/or that the ECU additionally comprises at least a third battery terminal and a fourth battery terminal, wherein the third battery terminal is materially joined with the third winding wire and the fourth battery terminal is materially joined with the fourth winding wire. This allows for battery terminal redundancy and therefore a higher reliability of the ECU. The material joint between a winding wire and a battery terminal may be a welded joint, preferably a laser-welded joint.

It may also be provided in the scope of the present invention, that the coil is a choke coil, preferably a toroidal choke coil, for filtering an input current and/or output current provided by a battery via the battery terminals. The filtering may at least consist of blocking common-mode currents and passing differential currents. This offers the advantage that electromagnetic interference as well as a malfunctioning of following power electronic devices can be efficiently suppressed. The coil comprises a core and at least a first winding wire and a second winding wire. For realizing said filtering, it may be provided, that the first winding wire and the second winding wire are negatively coupled. In other words, it may be provided, that at least the first winding wire and the second winding wire have a negative inductive coupling. The core may be a toroidal core offering the advantage of low stray magnetic fields and a reduced necessity of shielding the coil. The core may further be a ferrite core. At least one winding wire may be manufactured at least partially from copper.

According to the invention, the electronic control unit further comprises at least one printed circuit board (PCB), wherein at least the first winding wire and the second winding wire are electrically connected to the PCB, preferably to conductive tracks on said PCB. The connection between at least one winding wire and the PCB may be realized via a press fitting or a solder joint. In this context it may be provided, that the PCB comprises at least one breakthrough in which a winding wire is at least partially insertable to establish a press fitting. It may further be provided that the PCB comprises at least two breakthroughs, each intended to receive one of winding wired in order to establish an electrical connection between the first and the second winding wire and the PCB. The use of a PCB allows a simple fixation of different components to each other as well as a simple realization of electrical connections for signal transmission and/or power supply between individual components. A connection via press-fit joints allows a particularly simple and uncomplicated as well as safe arrangement of components on a PCB.

In the scope of the invention it may further be provided, that the ECU further comprises at least one signal terminal, via which an electrical connection to at least one steering sensor can be established. The electrical connection may be used to receive steering signals from at least one steering sensor of the vehicle. A steering signal may include at least an information about a required steering movement of at least one wheel of the vehicle. These steering signals may be subsequently converted into corresponding control pulses for at least one servomotor by the ECU, wherein the at least one servomotor is operatively connected to at least one wheel of the vehicle and can thus initiate or execute a steering movement of said wheel.

It may further be provided, that the signal terminal comprises at least one or a plurality of electrical contacts. Further, it is conceivable that the signal terminal is designed in a way that a plug is attachable to at least the electrical contacts of the signal terminal in order to establish a connection between the ECU and a steering sensor of the vehicle preferably via a corresponding cable connection. At least one, preferably all, of the electrical contacts may be electrically connected to a printed circuit board of the ECU, preferably to at least one conductive track of the PCB. The PCB may be the same PCB which is in electrical connection with the coil and/or a processing unit of the ECU.

In the scope of the present invention it is further conceivable, that the ECU comprises at least one processing unit for processing signals from at least one steering sensor, wherein the processing unit is electrically connected to a printed circuit board of the ECU, preferably to at least one conductive track on the PCB. The PCB may be the same printed circuit board which is in electrical connection with the coil and/or at least one signal terminal of the ECU. It may be provided that the processing unit is electrically connected to at least one signal terminal via the ECU, preferably via at least one conductive track of the ECU.

The processing of the signals from a steering sensor may at least comprise translating the signals or at least one signal from at least one steering sensor received by the processing unit into corresponding control commands for at least one servomotor. The at least one servomotor may be operatively connected to at least one wheel of the vehicle and may thus be able to initiate or execute a steering movement of said wheel. The translation of the steering signal can at least consist in that a power supply of the servo motor is activated by the processing unit over at least one defined time interval and subsequently deactivated, wherein the received steering signal is specific for at least said time interval. It may further be provided, that the servomotor when the power supply is deactivated is in standstill and when the power supply is activated at least one shaft of the servomotor rotates.

The power supply of at least one servomotor may be provided via the first and second battery terminals, preferably when a battery is arranged in contact with the first and second battery terminal in order to use said battery as a voltage and/or power source. It may further be provided, that the at least one servomotor or at least one servomotor can be brought into an electrical connection with the ECU, preferably with the processing unit and/or a switch of the ECU or a PCB. The PCB may be the PCB on which the processing unit and/or the coil and/or at least one signal terminal is arranged. The electrical connection may be achieved via a cable.

In the scope of the present invention, it may further be provided that the ECU, preferably the processing unit comprises at least one switch, wherein the at least one switch is in operative and/or electrical connection with the processing unit so that the switch can be controlled by the processing unit in dependence of a steering sensor signal received in the processing unit. The switch may be in operative connection with and/or electrically coupled to at least the coil and at least one servomotor or at least one electrical conductor which is connectable with at least one servomotor such that the power supply of at least one servomotor can be activated in a first switch state and the power supply of the servomotor can be deactivated in a second switch state. The power supply may be realized by an electrical connection to the coil, as the coil is directly connected to the battery terminals.

The PCB may provide an electrical connection between different components arranged on the PCB such as an electrical connection between the coil and a processing unit and/or a signal terminal and a processing unit. Electrical connections provided by the PCB may be realised by conductive tracks at least partially formed on the surface of the PCB. The conductive tracks may preferably be copper tracks in order to ensure a high conductivity and therefore high-quality electrical connection. The PCB may also comprise at least one connector interface or solder interface for establishing an electrical connection with components outside the ECU, such as a servo motor of a power steering system of a vehicle.

It may further be provided in the scope of the present invention, that the protective material at least partially forms a housing around at least the battery terminals and the coil, such that the battery terminals and the coil are at least partially enclosed in said housing. It may further be provided that at least a first recess is provided in said housing, wherein said first recess is arranged in such a way that a battery can be inserted into said first recess and electrically coupled to said battery terminals, in particular such that the battery may be used as a voltage source or power source for the ECU. This ensures sufficient protection of the corresponding components while maintaining the required accessibility, particularly with regard to the battery terminals.

It may further be provided that the housing formed by the protective material further at least partially encloses at least one signal terminal, preferably two signal terminals and/or all signal terminals, wherein at least a second recess is provided in said housing, wherein the second recess is arranged in such a way that a plug or a cable may be arranged in said recess in order to be able to establish an electrical connection between the at least one signal terminal, preferably at least one electrical contact of the signal terminal, and at least one steering sensor. The cable may be used for transmitting electrical signals between the steering sensor and the signal terminal. The second recess may be designed such that a plug may be received at least partially in a form-fitting manner. It may further be provided, that for each signal terminal which is at least partially enclosed by said housing, at least one recess is provided in said housing wherein each recess is arranged with regard to a signal terminal such that a plug or a cable may be arranged in said recess in order to be able to establish an electrical connection between the signal terminal, preferably at least one electrical contact of the signal terminal, and at least one steering sensor.

Furthermore, the above-mentioned task is solved by a process for manufacturing an electronic control unit, the electronic control unit comprising at least a first battery terminal, a second battery terminal and an electromagnetic coil, wherein the coil comprises a core and at least a first winding wire and a second winding wire, wherein the winding wired are at least partially wound around the core, wherein at least the following steps are performed, preferably in the specified order:
a. Arranging the battery terminals and the coil such that the first battery terminal is at least partially in contact with the first winding wire at a first contact section and the second battery terminal is at least partially in contact with the second winding wire at a second contact section,
b. Performing a welding operating, preferably a laser-welding operation, on the first contact section and the second contact section such that after the welding operation the first battery terminal is materially joined to the first winding wire and the second battery terminal is materially joined to the second winding wire,
c. Applying an at least temporarily liquid protective material to at least the battery terminals and the coil such that at least the battery terminals and the coil are at least partially covered with a common layer of a protective material.

The process for manufacturing an ECU according to the present invention offers the advantage, that due to a direct connection of the battery terminals and the wounding wires of the coil a particularly reliable electrical connection is created between the components. Also, this type of connection allows a particularly weight- and cost-efficient design of the ECU as no further components or infrastructure such as a PCB or conductive tracks on a PCB are required for the electrical connection between the coil and the battery terminals. Further, at least the battery terminals and the coil are at least partially covered by a common layer of a protective material for protection against external influences such das humidity or force application. Therefore, separate components are no longer covered by separate housings, as rather a common housing is used to cover multiple components of the ECU simultaneously. This has the advantage that the number of manufacturing steps can be decreased as only a single housing and/or protective cover needs to be mounted on and/or applied to and/or built around the components instead of mounting multiple housings in separate manufacturing steps. This advantage even increases when additional components, such as at least one signal terminal are also at least partially covered with the common layer of the protective material. Also, at least the coil and the battery terminals are fixed in position relative to each other due to covering them with a common layer of the protective material, so that additional fixing of both components, e.g. on a PCB, is not necessary.

The at least temporarily liquid protective material may be understood as a melted protective material, which has been converted from a solid to a liquid state by heating and can be converted back from a liquid to a solid state by cooling. In other words, the protective material is in a liquid state during application to the ECU and/or components of the ECU and is subsequently cooled and thus converted into a dimensionally stable state. A common layer is to be understood as a layer that has been applied in a single process step, i.e. it is made of a single material and is coherent.

According to the present invention at least the following step is additionally performed, preferably after step c):
- Arranging at least the coil on a printed circuit board wherein at least the first winding wire and the second winding wire are electrically connected to the printed circuit board, preferably via a press fitting.

In the scope of the present invention it may further be provided, that at least one of the following steps is additionally performed, preferably after step c):
- Arranging at least one signal terminal on a printed circuit board, wherein at least one electrical contact of the signal terminal is electrically connected to the printed circuit board, preferably via press fitting,
- Arranging at least one processing unit on a printed circuit board, wherein at least one electrical contact of the processing unit is electrically connected to the printed circuit board, preferably via press fitting.

It may be provided, that at least two of the above-mentioned steps related to arranging components on the PCB are conducted simultaneously, as at least two components, preferably at least the coil and at least one signal terminal, may be at least partially covered by a common layer of the protective material and therefore fixed in position relative to each other. This offers the advantage, that a plurality of components can be arranged on the PCB in a single process step, allowing for a time- and cost-efficient production.

In the scope of the present invention it is further conceivable, that least the following step is additionally performed, preferably as a part of step c):
- Forming a housing from the protective material around at least the battery terminals and the coil wherein at least one recess is provided in said housing, wherein said recess is arranged in such a way that a battery can be inserted into said recess and electrically coupled to said battery terminals.

In other words, it may be provided that the protective material is not only partially applied directly to components of the ECU but that additionally three-dimensional structures are formed from the protective material forming a housing around at least the battery terminals and the coil. Additionally, a recess is provided in order to not only assure a sufficient protection of the components but also the required accessibility, particularly with regard to the battery terminals.

It may further be provided, that the housing from the protective material is additionally formed around at least one signal terminal, preferably at least two signal terminals or exactly two signal terminals. In this case it may further be provided, that at least a second recess is provided in said housing, wherein the second recess is arranged in such a way that a plug or a cable may be arranged in said recess in order to be able to establish an electrical connection between the at least one signal terminal, preferably at least one electrical contact of the signal terminal, and at least one steering sensor.

It may further be provided, that the protective material is at least partially applied and/or the housing from the protective material is formed in the course of an overmolding process. In an overmolding process a melted protective material such as a plastic or thermoplastic, may be applied to certain areas of the ECU in order cover at least sections of the ECU with the protective material.

While cooling the protective material hardens to solid state and reliably protects the corresponding sections of the ECU from external influences. It may be provided, that at least the battery terminals and the coil are at least partially covered with the protective material in the course of an overmolding process.

It may further be provided in the scope of the present invention, that, preferably before step c), at least one of the following steps is performed:
- Arranging at least the battery terminals and the coil in a molding tool in preparation for conducting an overmolding process,
- Arranging at least one signal terminal in a molding tool in preparation for conducting an overmolding process.

The molding tool may enclose the components arranged in the molding tool at least in sections, in particular completely, during the overmolding process such that the protective material, preferably in a liquid state, can be introduced into the molding tool under pressure and brought into the desired shape as prefabricated cavities in the molding tool are filled with the protective material.

It may be further provided, that with the battery terminals and the coil also at least one, preferably two signal terminals are arranged in the molding tool in preparation for conduction an overmolding process, such that a common layer of the protective material may be applied to at least the battery terminals, the coil and at least one signal terminal.

The molding tool may consist of at least two parts, whereby the components such as the battery terminals and/or the coil and/or at least one signal terminal are first placed in a first part and the second part is then at least partially brought into contact with the first part to close the molding tool.

It may be provided, that the ECU is an ECU according to the present invention, respectively according to any of claims 1 to 10.

Furthermore, the above-mentioned task is solved by a vehicle comprising at least one electronic control unit according to the present invention. The ECU may be installed in any suitable position in the vehicle. The vehicle may further comprise at least one steering sensor which may be electrically coupled to the ECU, preferably to at least one signal terminal of the ECU, in order to transmit steering signals from the steering sensor to the ECU. With respect to the vehicle, the same advantages arise as have been described with respect to the electronic control unit and the process for manufacturing an electronic control unit. The vehicle may further include at least one servomotor. The servomotor may be operatively connected to at least one wheel of the vehicle in order to initiate or execute a steering movement of said wheel.

With reference to the accompanying drawings, the present invention is explained in more detail below.
- Fig. 1: shows a schematic illustration of an electronic control unit according to the present invention,
- Fig. 2: shows a schematic illustration of an electronic control unit according to the present invention,
- Fig. 3: shows a schematic illustration of an electronic control unit according to the present invention,
- Fig. 4: shows a schematic illustration of an electronic control unit according to the present invention,
- Fig. 5: shows a schematic illustration of an electronic control unit according to the present invention,
- Fig. 6: shows a schematic illustration of a process for manufacturing an electronic control unit according to the present invention,
- Fig. 7: shows a schematic illustration of a vehicle according to the present invention.

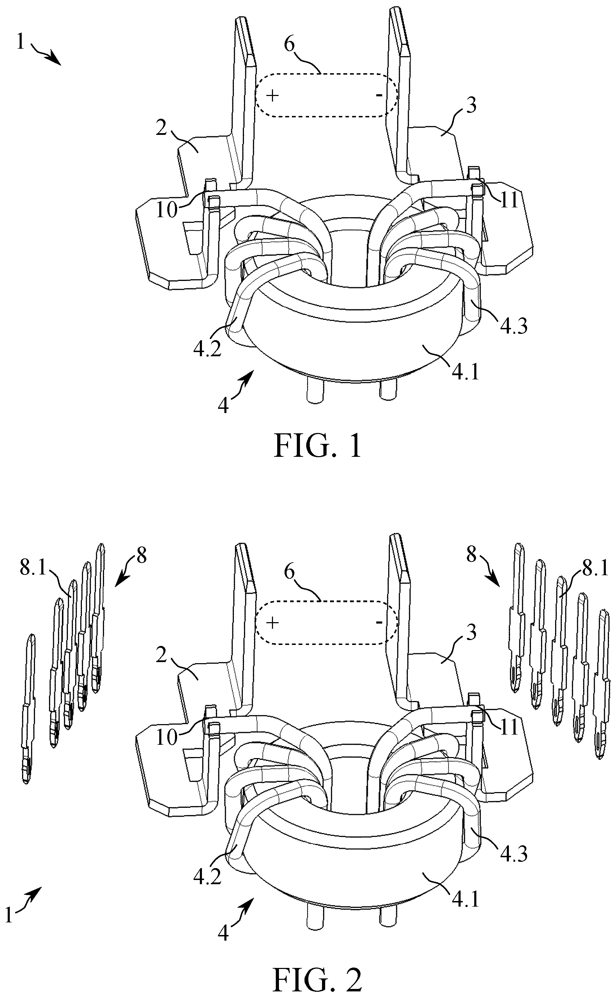

Fig. 1 shows a schematic illustration of an electronic control unit 1 according to the present invention, wherein for reasons of clarity, the protective material 5 or housing 9 is not shown. The ECU comprises at least a first battery terminal 2 and a second battery terminal 3 as well as an electromagnetic coil 4. The coil 4 comprises a core 4.1 and at least a first winding wire 4.2 and a second winding wire 4.3, wherein the winding wires 4.2, 4.3 are at least partially wound around the core 4.1 and wherein the first battery terminal 2 is materially joined to the first winding wire 4.2 at a first contact section 10 and the second battery terminal 3 is materially joined with the second winding wire 4.3 at a second contact section 11. As will be illustrated in the following figures, the battery terminals 2, 3 and the coil 4 are further at least partially covered with at least one common layer of a protective material 5.

The ECU 1 according to Fig. 1 offers the advantage, that due to a direct connection of the battery terminals 2, 3 and the wounding wires 4.2, 4.3 of the coil 4 a particularly reliable electrical connection is created between the components. Also, this type of connection allows a particularly weight- and cost-efficient design of the ECU 1 as no further components or infrastructure such as a PCB 7 or conductive tracks 7.1 on a PCB 7 are required for the electrical connection between the coil 4 and the battery terminals 2, 3.

The material joint between the first battery terminal 2 and the first winding wire 4.2 at the first contact section 10 and the material joint between the second battery terminal 3 and the second winding wire 4.3 at the second contact section 11 is a welded joint which was generated by laser welding. The material joints between the winding wires 4.2, 4.3 and the battery terminals 2, 3 are designed in such a way that electrical conductivity is ensured between the battery terminals 2, 3 and the winding wires 4.2, 4.3 via the joint.

The battery terminals 2, 3 are electrical contacts which ca at least partially brought into contact with a battery 6 in order to use the battery 6 as a voltage and/or power source in an electrical circuit. The battery 6 is only shown schematically by the dashed lines. Two battery terminals 2, 3 are provided, whereby each battery terminal 2, 3 can be brought into contact with one pole of the battery 6 to connect the battery as a voltage and/or power source in an electrical circuit.

According to Fig. 1 the coil 4 is designed as a toroidal choke coil 4 for filtering an input current provided by a battery 6. The core 4.1 is a toroidal core 4.1 offering the advantage of low stray magnetic fields and a reduced necessity of shielding the coil 4.1.

Fig. 2 shows a schematic illustration of an electronic control unit 1 according to the present invention, wherein for reasons of clarity, the protective material 5 or housing 9 is not shown. In addition to Fig.1, the ECU 1 comprises further two signal terminals 8.

Via each signal terminal 8 an electrical connection to at least one steering sensor can be established preferably via a cable. The electrical connection between a signal terminal 8 and a steering sensor can be used to receive steering signals from at least one steering sensor of the vehicle 50. Each signal terminal 8 comprises a plurality of electrical contacts 8.1. The signal terminals 8 are designed in a way that a plug is attachable to the electrical contacts 8.1 in order to establish a connection between the ECU 1 and a steering sensor of the vehicle 50 preferably via a corresponding cable connection.

Fig. 1 and Fig. 2 further show arrangements of components of the ECU 1 as they could be exemplarily placed in a molding tool in preparation for conducting an overmolding process in which at least one common layer of a protective material 5 is applied to at least the coil 4 and the battery terminals 2, 3 or at least the coil 4, the battery terminals 2, 3 and at least one, preferably two, signal terminals 8, such that said components are at least partially covered by at least one layer of a protective material 5.

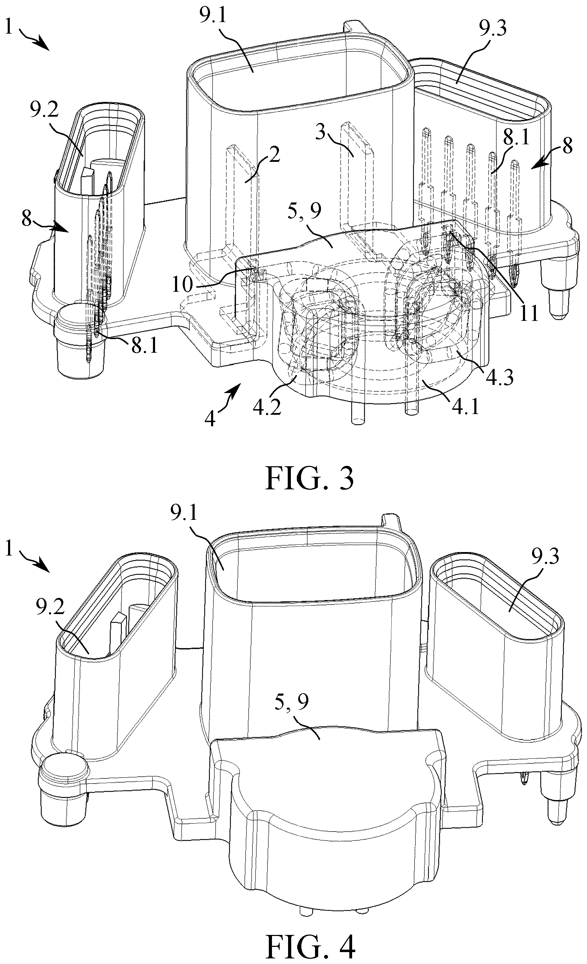

Fig. 3 shows a schematic illustration of an electronic control unit 1 according to the present invention including the protective material 5 which at least partially covers and/or encloses the first battery terminal 2, the second battery terminal 3, the coil 4 as well as the signal terminals 8. Different components of the ECU 1 are shown as dashed lines for a better overview. Fig. 4 also shows a schematic illustration of an ECU 1 according to the present invention including the protective material 5, where however, the illustration of hidden components has been omitted.

The protective material 5 forms a housing 9 around the coil 4, the battery terminals 2, 3 and the signal terminals 8 such that the coil 4, the battery terminals 2, 3 and the signal terminals 8 are at least partially enclosed in said housing 9. The housing 9 further provides a first recess 9.1, wherein said first recess 9.1 is arranged in such a way that a battery 6 can be inserted into said first recess 9.1 and electrically coupled to said battery terminals 2, 3. The housing 9 further provided a second recess 9.2 and a third recess 9.3, wherein the second recess 9.2 and the third recess 9.3 are arranged in such a way that a plug or a cable may be arranged in said recesses 9.2, 9.3 in order to be able to establish an electrical connection between a signal terminal 8, preferably at least one electrical contact 8.1 of a signal terminal 8, and at least one steering sensor of the vehicle 50. This ensures sufficient protection of the corresponding components while maintaining the required accessibility, particularly with regard to the battery terminals 2, 3 and signal terminals 8.

The protective material 5 was applied in the course of an overmolding process. For this purpose, the arrangement of Fig. 2 (without the battery 6) was arranged in a molding tool and the melted protective material 5 was brought into the molding tool under pressure in order to fill prefabricated cavities in the molding tool with the protective material and enclose and/or cover the components placed in the molding tool at least partially with the protective material. The cavities in the molding tool which are filled with the melted protective material 5 therefore represent the geometry of the housing 5 as a negative. When cooled, the protective material 5 returns to a solid state and the ECU 1 including the housing 9 formed from the protective material can be removed from the molding tool and put to further use. Fig. 3 and Fig. 4 show the ECU 1 after removal from the molding tool, such that the protective material 5 is cooled and in a solid state.

With regard to Fig. 3 and Fig. 4, the protective material 5 is at least partially in direct contact with the coil 4 and the battery terminals 2, 3, as these components are at least partially coated with the protective material 5 in the course of the overmolding process. This results in a particularly compact and lightweight design of the ECU 1, as the size of the housing 9 can be at least partially directly adapted to the surface of the respective components.

The coil 4, the battery terminals 2, 3 as well as the signal terminals 8, preferably at least one electrical contact 8.1 of each signal terminal 8, are at least partially joined with the protective material 5 in a form-fitting manner such that the position said components relative to each other is secured by the protective material 5. Also, the housing 9 formed by the protective material 5 is reliably secured to said components of the ECU.

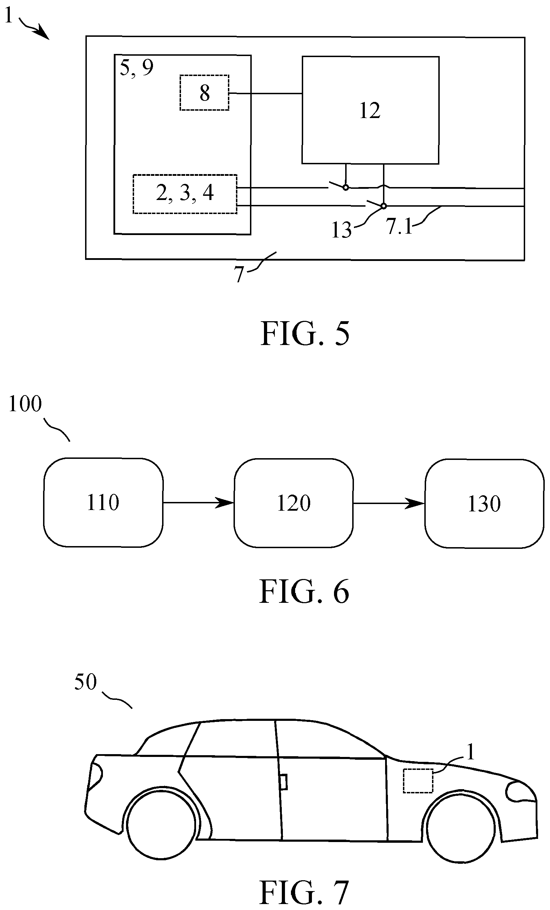

Fig. 5 shows a schematic illustration of an ECU 1 according to the present invention, wherein the ECU 1 further comprises a PCB 7. The first winding wire 4.2 and the second winding wire 4.3 are electrically connected to the PCB by press fitting. Also, the electronic contacts 8.1 of the signal terminals 8 are electrically connected to the PCB by press fitting.

In Fig. 3 and 4 it is shown, that the winding wires 4.2, 4.3 as well as the electrical contacts 8.1 are not completely enclosed by the protective material 5 and/or housing 9. The winding wires 4.2, 4.3 as well as the electrical contacts 8.1 of the signal terminals 8 are at least partially exposed, respectively protrude at least partially from the protective material 5 such that they can be connected easily to the PCB 7.

The ECU 1 shown in Fig. 5 further comprises a processing unit 12 for processing signals from at least one steering sensor, wherein the processing unit 12 is electrically connected to the PCB 7. Via conductive tracks 7.1 on the PCB 7, the processing unit 12 is electrically connected to at least one signal terminal 8 in order to process at least one steering sensor signal received by at least one signal terminal 8.

Further, the ECU 1 comprises at least one switch 13 wherein the at least one switch 13 is in operative and/or electrical connection with the processing unit 12 so that the switch can be controlled by the processing unit 12 in dependence of a steering sensor signal received in the processing unit 12. The switch 13 is in operative connection with and/or electrically coupled to at least the coil 4 and at least one servomotor or at least one electrical conductor (in Fig. 5 conductive track 7.1) which is connectable with at least one servomotor such that the power supply of at least one servomotor or at least one electrical conductor on the PCB can be activated in a first switch state and the power supply of the servomotor or at least one electrical conductor on the PCB can be deactivated in a second switch state. With regard to the power supply of an electrical conductor on the PCB, a consumer such as a servo motor may be connected to the electrical conductor on the PCB in order to regulate it's power supply in an according manner. Fig. 5 shows switch 13 in a switch state wherein a power supply is deactivated.

Fig. 6 shows a schematic illustration of a process 100 for manufacturing an electronic control unit 1 comprising at least a first battery terminal 2, a second battery terminal 3 and an electromagnetic coil 4, wherein the coil 4 comprises a core 4.1 and at least a first winding wire 4.2 and a second winding wire 4.3, wherein at least the following steps are performed, preferably in the specified order:
a. Arranging 110 the battery terminals 2, 3 and the coil 4 such that the first battery terminal 2 is at least partially in contact with the first winding wire 4.2 at a first contact section 10 and the second battery terminal 3 is at least partially in contact with the second winding wire 4.3 at a second contact section 11,
b. Performing 120 a welding operating, preferably a laser-welding operation, on the first contact section 10 and the second contact section 11 such that after the welding operation the first battery terminal 2 is materially joined to the first winding wire 4.2 and the second battery terminal 3 is materially joined to the second winding wire 4.3,
c. Applying 130 an at least temporarily liquid protective material to at least the battery terminals 2, 3 and the coil 4 such that at least the battery terminals 2, 3 and the coil 4 are at least partially covered with a common layer of a protective material 5.

Fig. 7 shows a schematic illustration of a vehicle 50 according to the present invention, wherein the vehicle 50 comprises at least one ECU 1.

### List of reference signs

- 1: Electronic control unit (ECU)
- 2: First battery terminal
- 3: Second battery terminal
- 4: Coil
- 4.1: Core
- 4.2: First winding wire
- 4.3: Second winding wire
- 5: Protective material
- 6: Battery
- 7: Printed Circuit Board (PCB)
- 7.1: Conductive tracks
- 8: Signal terminal
- 8.1: Electrical contact
- 9: Housing
- 9.1: First recess
- 9.2: Second recess
- 9.3: Third recess
- 10: First contact section
- 11: Second contact section
- 12: Processing unit
- 13: Switch
- 50: Vehicle
- 100: Process
- 110: Arranging
- 120: Performing
- 130: Applying

## Claims

1. Electronic control unit (1) for use in an electric power steering system of a vehicle (50), the electronic control unit (1) comprising at least a first battery terminal (2), a second battery terminal (3) and an electromagnetic coil (4), wherein the coil (4) comprises a core (4.1) and at least a first winding wire (4.2) and a second winding wire (4.3), wherein the winding wires (4.2, 4.3) are at least partially wound around the core (4.1) and wherein the first battery terminal (2) is materially joined to the first winding wire (4.2) and the second battery terminal (3) is materially joined to the second winding wire (4.3) and wherein at least the battery terminals (2, 3) and the coil (4) are at least partially covered with at least one common layer of a protective material (5), wherein the electronic control unit (1) further comprises at least one printed circuit board (7), wherein at least the first winding wire (4.2) and the second winding wire (4.3) are electrically connected to the printed circuit board (7).

2. Electronic control unit (1) according to claim 1,
**characterized in that,**
the material joint between the first battery terminal (2) and the first winding wire (4.2) and/or between the second battery terminal (3) and the second winding wire (4.3) is a welded joint, preferably a laser-welded joint.

3. Electronic control unit (1) according to one of the preceding claims,
**characterized in that,**
the protective material (5) is a plastic, preferably a thermoplastic, and/or the protective material (5) is applied at least to the coil (4) and the battery terminals (2, 3) in the course of an overmolding process.

4. Electronic control unit (1) according to one of the preceding claims,
**characterized in that,**
the protective material (5) is at least partially in direct contact with the coil (4) and/or the first battery terminal (2) and/or the second battery terminal (3).

5. Electronic control unit (1) according to one of the preceding claims,
**characterized in that,**
the coil (4) is a choke coil, preferably a toroidal choke coil, for filtering an input current provided by a battery (6) via the battery terminals (2, 3).

6. Electronic control unit (1) according to one of the preceding claims,
**characterized in that,**
the electronic control unit (1) further comprises at least one signal terminal (8) via which an electrical connection to at least one steering sensor can be established.

7. Electronic control unit (1) according to claim 6,
**characterized in that,**
the at least one signal terminal (1) comprises at least one electrical contact (8.1) wherein the at least one electrical contact (8.1) is electrically connected to the printed circuit board (7), preferably via a press fitting.

8. Electronic control unit (1) according to any of the preceding claims,
**characterized in that,**
the electronic control unit (1) comprises at least one processing unit (12), for processing signals from at least one steering sensor wherein the processing unit (12) is electrically connected to the printed circuit board (7).

9. Electronic control unit (1) according to one of the preceding claims,
**characterized in that,**
that the protective material (5) forms a housing (9) around at least the battery terminals (2, 3) and the coil (4) wherein at least one recess (9.1) is provided in the housing (9), wherein said recess (9.1) is arranged in such a way that a battery (6) can be inserted into said recess (9.1) and electrically coupled to said battery terminals (2, 3).

10. Process (100) for manufacturing an electronic control unit (1), the electronic control unit (1) comprising at least a first battery terminal (2), a second battery terminal (3) and an electromagnetic coil (4), wherein the coil (4) comprises a core (4.1) and at least a first winding wire (4.2) and a second winding wire (4.3), wherein at least the following steps are performed, preferably in the specified order:
a. Arranging (110) the battery terminals (2, 3) and the coil (4) such that the first battery terminal (2) is at least partially in contact with the first winding wire (4.2) at a first contact section (10) and the second battery terminal (3) is at least partially in contact with the second winding wire (4.3) at a second contact section (11),
b. Performing (120) a welding operating, preferably a laser-welding operation, on the first contact section (10) and the second contact section (11) such that after the welding operation the first battery terminal (2) is materially joined to the first winding wire (4.2) and the second battery terminal (3) is materially joined to the second winding wire (4.3),
c. Applying (130) an at least temporarily liquid protective material to at least the battery terminals (2, 3) and the coil (4) such that at least the battery terminals (2, 3) and the coil (4) are at least partially covered with a common layer of a protective material (5),
wherein the following step is additionally performed:
Arranging at least the coil (4) on a printed circuit board (7) wherein at least the first winding wire (4.2) and the second winding wire (4.3) are electrically connected to the printed circuit board (7).

11. Process (100) according to claim 10,
**characterized in that,**
at least the following step is additionally performed, preferably after step c):
• Arranging at least one signal terminal (8) on a printed circuit board (7), wherein at least one electrical contact (8.1) of the signal terminal (8) is electrically connected to the printed circuit board (7), preferably via press fitting,
• Arranging at least one processing unit (12) on a printed circuit board (7), wherein at least one electrical contact of the processing unit (12) is electrically connected to the printed circuit board (7), preferably via solder joint.

12. Process (100) according to any of claims 10 or 11,
**characterized in that,**
at least the following step is additionally performed, preferably as a part of step c):
• Forming a housing from the protective material around at least the battery terminals (2, 3) and the coil (4) wherein at least one recess (9.1) is provided in said housing (9), wherein said recess (9.1) is arranged in such a way that a battery (6) can be inserted into said recess (9.1) and electrically coupled to said battery terminals (2, 3).

13. Process (100) according to any of claims 10 to 12,
**characterized in that,**
at least one of the following steps are additionally performed, preferably before step c):
• Arranging the battery terminals (2, 3) and the coil (4) in a molding tool in preparation for conducting an overmolding process,
• Arranging at least one signal terminal (8) in a molding tool in preparation for conducting an overmolding process.

14. Vehicle (50) comprising at least one electronic control unit (1) according to any of claims 1 to 9.

## Patentansprüche

1. Elektronische Steuereinheit (1) zur Verwendung in einem elektrischen Servolenksystem eines Fahrzeugs (50), wobei die elektronische Steuereinheit (1) mindestens einen ersten Batterieanschluss (2), einen zweiten Batterieanschluss (3) und eine elektromagnetische Spule (4) umfasst, wobei die Spule (4) einen Kern (4.1) und mindestens einen ersten Wicklungsdraht (4.2) und einen zweiten Wicklungsdraht (4.3) umfasst, wobei die Wicklungsdrähte (4.2, 4.3) mindestens teilweise um den Kern (4.1) gewickelt sind und wobei der erste Batterieanschluss (2) materiell mit dem ersten Wicklungsdraht (4.2) verbunden ist und der zweite Batterieanschluss (3) materiell mit dem zweiten Wicklungsdraht (4.3) verbunden ist und wobei mindestens die Batterieanschlüsse (2, 3) und die Spule (4) mindestens teilweise mit mindestens einer gemeinsamen Schicht eines Schutzmaterials (5) bedeckt sind, wobei die elektronische Steuereinheit (1) ferner mindestens eine Leiterplatte (7) umfasst, wobei mindestens der erste Wicklungsdraht (4.2) und der zweite Wicklungsdraht (4.3) elektrisch mit der Leiterplatte (7) verbunden sind.

2. Elektronische Steuereinheit (1) nach Anspruch 1,
**dadurch gekennzeichnet, dass**
die materielle Verbindung zwischen dem ersten Batterieanschluss (2) und dem ersten Wicklungsdraht (4.2) und/oder zwischen dem zweiten Batterieanschluss (3) und dem zweiten Wicklungsdraht (4.3) eine geschweißte Verbindung ist, vorzugsweise eine lasergeschweißte Verbindung.

3. Elektronische Steuereinheit (1) nach einem der vorhergehenden Ansprüche,
**dadurch gekennzeichnet, dass**
das Schutzmaterial (5) ein Kunststoff, vorzugsweise ein Thermokunststoff, ist, und/oder das Schutzmaterial (5) im Verlauf eines Umspritzungsverfahrens mindestens auf die Spule (4) und die Batterieanschlüsse (2, 3) aufgebracht wird.

4. Elektronische Steuereinheit (1) nach einem der vorhergehenden Ansprüche,
**dadurch gekennzeichnet, dass**
das Schutzmaterial (5) mindestens teilweise in direktem Kontakt mit der Spule (4) und/oder dem ersten Batterieanschluss (2) und/oder dem zweiten Batterieanschluss (3) ist.

5. Elektronische Steuereinheit (1) nach einem der vorhergehenden Ansprüche,
**dadurch gekennzeichnet, dass**
die Spule (4) eine Induktionsspule ist, vorzugsweise eine Toroid-Induktionsspule, zum Filtern eines über die Batterieanschlüsse (2, 3) von einer Batterie (6) bereitgestellten Eingangsstroms.

6. Elektronische Steuereinheit (1) nach einem der vorhergehenden Ansprüche,
**dadurch gekennzeichnet, dass**
die elektronische Steuereinheit (1) ferner mindestens einen Signalanschluss (8) umfasst, über den eine elektrische Verbindung zu mindestens einem Lenksensor aufgebaut werden kann.

7. Elektronische Steuereinheit (1) nach Anspruch 6,
**dadurch gekennzeichnet, dass**
der mindestens eine Signalanschluss (1) mindestens einen elektrischen Kontakt (8.1) umfasst, wobei der mindestens eine elektrische Kontakt (8.1) mit der Leiterplatte (7) elektrisch verbunden ist, vorzugsweise über einen Presssitz.

8. Elektronische Steuereinheit (1) nach einem der vorhergehenden Ansprüche,
**dadurch gekennzeichnet, dass**
die elektronische Steuereinheit (1) mindestens eine Verarbeitungseinheit (12) zum Verarbeiten von Signalen von mindestens einem Lenksensor umfasst, wobei die Verarbeitungseinheit (12) mit der Leiterplatte (7) elektrisch verbunden ist.

9. Elektronische Steuereinheit (1) nach einem der vorhergehenden Ansprüche,
**dadurch gekennzeichnet, dass**
das Schutzmaterial (5) um mindestens die Batterieanschlüsse (2, 3) und die Spule (4) ein Gehäuse (9) bildet, wobei in dem Gehäuse (9) mindestens eine Ausnehmung (9.1) bereitgestellt ist, wobei die Ausnehmung (9.1) in einer solchen Weise angeordnet ist, dass eine Batterie (6) in die Ausnehmung (9.1) eingesetzt und elektrisch mit den Batterieanschlüssen (2, 3) verbunden werden kann.

10. Verfahren (100) zum Herstellen einer elektronischen Steuereinheit (1), wobei die elektronische Steuereinheit (1) mindestens einen ersten Batterieanschluss (2), einen zweiten Batterieanschluss (3) und eine elektromagnetische Spule (4) umfasst, wobei die Spule (4) einen Kern (4.1) und mindestens einen ersten Wicklungsdraht (4.2) und einen zweiten Wicklungsdraht (4.3) umfasst, wobei mindestens die folgenden Schritte ausgeführt werden, vorzugsweise in der angegebenen Reihenfolge:
a Anordnen (110) der Batterieanschlüsse (2, 3) und der Spule (4), so dass der erste Batterieanschluss (2) in einem ersten Kontaktabschnitt (10) mindestens teilweise im Kontakt mit dem ersten Wicklungsdraht (4.2) ist und der zweite Batterieanschluss (3) in einem zweiten Kontaktabschnitt (11) mindestens teilweise im Kontakt mit dem zweiten Wicklungsdraht (4.3) ist,
b. Durchführen (120) einer Schweißoperation, vorzugsweise einer Laserschweißoperation, an dem ersten Kontaktabschnitt (10) und dem zweiten Kontaktabschnitt (11), so dass der erste Batterieanschluss (2) nach der Schweißoperation materiell mit dem ersten Wicklungsdraht (4.2) verbunden ist und der zweite Batterieanschluss (3) materiell mit dem zweiten Wicklungsdraht (4.3) verbunden ist,
c. Auftragen (130) eines mindestens vorübergehend flüssigen Schutzmaterials auf mindestens die Batterieanschlüsse (2, 3) und die Spule (4), so dass mindestens die Batterieanschlüsse (2, 3) und die Spule (4) mindestens teilweise mit einer gemeinsamen Schicht eines Schutzmaterials (5) bedeckt sind,
wobei der folgende Schritt zusätzlich ausgeführt wird:
Anordnen mindestens der Spule (4) auf einer Leiterplatte (7), wobei mindestens der erste Wicklungsdraht (4.2) und der zweite Wicklungsdraht (4.3) elektrisch mit der Leiterplatte (7) verbunden sind.

11. Verfahren (100) nach Anspruch 10,
**dadurch gekennzeichnet, dass**
mindestens der folgende Schritt zusätzlich ausgeführt wird, vorzugsweise nach Schritt c):
• Anordnen mindestens eines Signalanschlusses (8) auf einer Leiterplatte (7), wobei mindestens ein elektrischer Kontakt (8.1) des Signalanschlusses (8) mit der Leiterplatte (7) elektrisch verbunden ist, vorzugsweise über einen Presssitz,
• Anordnen mindestens einer Verarbeitungseinheit (12) auf einer Leiterplatte (7), wobei mindestens ein elektrischer Kontakt der Verarbeitungseinheit (12) mit der Leiterplatte (7) elektrisch verbunden ist, vorzugsweise über eine Lötverbindung.

12. Verfahren (100) nach einem der Ansprüche 10 oder 11,
**dadurch gekennzeichnet, dass**
mindestens der folgende Schritt zusätzlich ausgeführt wird, vorzugsweise als ein Teil von Schritt c):
• Ausbilden eines Gehäuses aus dem Schutzmaterial um mindestens die Batterieanschlüsse (2, 3) und die Spule (4), wobei in dem Gehäuse (9) mindestens eine Ausnehmung (9.1) bereitgestellt ist, wobei die Ausnehmung (9.1) in einer solchen Weise angeordnet ist, dass eine Batterie (6) in die Ausnehmung (9.1) eingesetzt und elektrisch mit den Batterieanschlüssen (2, 3) verbunden werden kann.

13. Verfahren (100) nach einem der Ansprüche 10 bis 12,
**dadurch gekennzeichnet, dass**
mindestens einer der folgenden Schritte zusätzlich ausgeführt wird, vorzugsweise vor Schritt c):
• Anordnen der Batterieanschlüsse (2, 3) und der Spule (4) in einem Formwerkzeug in Vorbereitung auf das Durchführen eines Umspritzungsverfahrens,
• Anordnen mindestens eines Signalanschlusses (8) in einem Formwerkzeug in Vorbereitung auf das Durchführen eines Umspritzungsverfahrens.

14. Fahrzeug (50), umfassend mindestens eine elektronische Steuereinheit (1) nach einem der Ansprüche 1 bis 9.

## Revendications

1. Unité de commande électronique (1) destinée à être utilisée dans un système de direction assistée électrique d'un véhicule (50), l'unité de commande électronique (1) comprenant au moins une première borne de batterie (2), une deuxième borne de batterie (3) et une bobine électromagnétique (4), la bobine (4) comprenant un noyau (4.1) et au moins un premier fil d'enroulement (4.2) et un second fil d'enroulement (4.3), les fils d'enroulement (4.2, 4.3) étant au moins partiellement enroulés autour du noyau (4.1), la première borne de batterie (2) étant physiquement reliée au premier fil d'enroulement (4. 2) et la deuxième borne de batterie (3) étant physiquement reliée au deuxième fil d'enroulement (4.3) et sachant que les bornes de batterie (2, 3) au moins et la bobine (4) sont au moins partiellement recouvertes d'au moins une couche commune d'un matériau de protection (5), l'unité de commande électronique (1) comprenant en outre au moins une carte de circuit imprimé (7), le premier fil d'enroulement (4.2) et le deuxième fil d'enroulement (4.3) au moins étant électriquement connectés à la carte de circuit imprimé (7).

2. Unité de commande électronique (1) selon la revendication 1,
**caractérisée en ce que**
l'assemblage entre la première borne de batterie (2) et le premier fil d'enroulement (4.2) et/ou entre la deuxième borne de batterie (3) et le deuxième fil d'enroulement (4.3) est un assemblage soudé, de préférence un assemblage soudé au laser.

3. Unité de commande électronique (1) selon l'une des revendications précédentes,
**caractérisée en ce que**
le matériau de protection (5) est une matière plastique, de préférence thermoplastique, et/ou **en ce que** le matériau de protection (5) est appliqué au moins sur la bobine (4) et les bornes de batterie (2, 3) au cours d'un processus de surmoulage.

4. Unité de commande électronique (1) selon l'une des revendications précédentes,
**caractérisée en ce que**
le matériau de protection (5) est au moins partiellement en contact direct avec la bobine (4) et/ou la première borne de batterie (2) et/ou la deuxième borne de batterie (3).

5. Unité de commande électronique (1) selon l'une des revendications précédentes,
**caractérisée en ce que**
la bobine (4) est une bobine d'arrêt, de préférence une bobine d'arrêt toroïdale, conçue pour filtrer un courant d'entrée fourni par une batterie (6) via les bornes de la batterie (2, 3).

6. Unité de commande électronique (1) selon l'une des revendications précédentes,
**caractérisée en ce que**
l'unité de commande électronique (1) comprend en outre au moins une borne de signalisation
(8) qui permet d'établir une connexion électrique avec au moins un capteur de direction.

7. Unité de commande électronique (1) selon la revendication 6,
**caractérisée en ce que**
une borne de signalisation (1) au moins comprend au moins un contact électrique (8.1), un contact électrique (8.1) au moins étant connecté électriquement à la carte de circuit imprimé (7), de préférence par l'intermédiaire d'un raccord à sertir.

8. Unité de commande électronique (1) selon l'une des revendications précédentes,
**caractérisée en ce que**
l'unité de commande électronique (1) comprend au moins une unité de traitement (12) prévue pour traiter les signaux provenant d'au moins un capteur de direction, l'unité de traitement (12) étant connectée électriquement à la carte de circuit imprimé (7).

9. Unité de commande électronique (1) selon l'une des revendications précédentes,
**caractérisée en ce que**
**que** le matériau de protection (5) forme un boîtier (9) au moins autour des bornes de batterie (2, 3) et de la bobine (4), un renfoncement (9.1) au moins étant prévu dans le boîtier (9), ledit renfoncement (9.1) étant disposé de manière à ce qu'une batterie (6) puisse être insérée dans ledit renfoncement (9.1) et raccordée électriquement aux bornes de batterie (2, 3).

10. Processus (100) de fabrication d'une unité de commande électronique (1), l'unité de commande électronique (1) comprenant au moins une première borne de batterie (2), une deuxième borne de batterie (3) et une bobine électromagnétique (4), la bobine (4) comprenant un noyau (4.1) et au moins un premier fil d'enroulement (4.2) et un deuxième fil d'enroulement (4.3), les étapes suivantes au moins étant effectuées, de préférence dans l'ordre spécifié :
a Disposition (110) des bornes de batterie (2, 3) et de la bobine (4) de manière à ce que la première borne de batterie (2) soit au moins partiellement en contact avec le premier fil d'enroulement (4.2) au niveau d'une première section de contact (10) et à ce que la deuxième borne de batterie (3) soit au moins partiellement en contact avec le deuxième fil d'enroulement (4.3) au niveau d'une deuxième section de contact (11),
b. Réalisation (120) d'une opération de soudage, de préférence une opération de soudage au laser, sur la première section de contact (10) et la deuxième section de contact (11) de manière à ce que, après l'opération de soudage, la première borne de batterie (2) soit matériellement reliée au premier fil d'enroulement (4.2) et à ce que la deuxième borne de batterie (3) soit matériellement reliée au deuxième fil d'enroulement (4.3),
c. Application (130) d'un matériau de protection liquide au moins temporairement sur les bornes de batterie (2, 3) et la bobine (4) au moins de manière à ce que les bornes de batterie (2, 3) et la bobine (4) au moins soient au moins partiellement recouvertes d'une couche commune d'un matériau de protection (5),
l'étape suivante étant, en outre, réalisée :
Disposition de la bobine (4) au moins sur une carte de circuit imprimé (7), le premier fil d'enroulement (4.2) et le second fil d'enroulement (4.3) au moins étant connectés électriquement à la carte de circuit imprimé (7).

11. Processus (100) selon la revendication 10,
**caractérisé en ce que**
au moins l'étape suivante est effectuée en plus, de préférence après l'étape c) :
• Disposition d'au moins une borne de signalisation (8) sur une carte de circuit imprimé (7), un contact électrique (8.1) au moins de la borne de signalisation (8) étant connecté électriquement à la carte de circuit imprimé (7), de préférence par l'intermédiaire d'un raccord à sertir,
• Disposition d'au moins une unité de traitement (12) sur une carte de circuit imprimé (7), un contact électrique de l'unité de traitement (12) au moins étant connecté électriquement à la carte de circuit imprimé (7), de préférence par l'intermédiaire d'un assemblage soudé.

12. Procédé (100) selon l'une des revendications 10 ou 11,
**caractérisé en ce que**
au moins l'étape suivante est effectuée en plus, de préférence comme partie intégrante de l'étape c) :
• Constitution d'un boîtier à partir du matériau de protection autour au moins des bornes de batterie (2, 3) et de la bobine (4), un renfoncement (9.1) au moins étant prévu dans le boîtier (9), ledit renfoncement (9.1) étant disposé de manière à ce qu'une batterie (6) puisse être insérée dans ledit renfoncement (9.1) et raccordée électriquement aux bornes de batterie (2, 3).

13. Processus (100) selon l'une des revendications 10 à 12,
**caractérisé en ce que**
au moins l'une des étapes suivantes est effectuée en plus, de préférence avant l'étape c) :
• Disposition des bornes de batterie (2, 3) et de la bobine (4) dans un outil de moulage en vue de la réalisation d'un processus de surmoulage,
• Disposition d'au moins une borne de signalisation (8) dans un outil de moulage en vue de la réalisation d'un processus de surmoulage.

14. Véhicule (50) comprenant au moins une unité de commande électronique ( 1) selon l'une des revendications 1 à 9.
